Europäisches Patentamt

European Patent Office

Office européen des brevets

(11) Veröffentlichungsnummer: **0 165 340**
**B1**

(12) **EUROPÄISCHE PATENTSCHRIFT**

(45) Veröffentlichungstag der Patentschrift:
08.03.89

(21) Anmeldenummer: 84115382.8

(22) Anmeldetag: 13.12.84

(51) Int. Cl.⁴: **G 21 K 4/00**, C 09 K 11/85

(54) Speicherschirm für Strahlungsbilder.

(30) Priorität: 21.05.84 DE 3418924

(43) Veröffentlichungstag der Anmeldung:
27.12.85 Patentblatt 85/52

(45) Bekanntmachung des Hinweises auf die Patenterteilung:
08.03.89 Patentblatt 89/10

(84) Benannte Vertragsstaaten:
DE GB

(56) Entgegenhaltungen:
DE-A-2 807 398

(73) Patentinhaber: **Siemens Aktiengesellschaft Berlin und München, Wittelsbacherplatz 2, D-8000 München 2 (DE)**

(72) Erfinder: **Degenhardt, Heinz, Dr., Anderlohrstrasse 18, D-8520 Erlangen (DE)**

EP 0 165 340 B1

LIBER, STOCKHOLM 1989

## Beschreibung

Die Erfindung betrifft Speicherleuchtschirme für Strahlungsbilder nach dem Oberbegriff des Patentanspruchs 1.

In der EP-A-0 021 174 ist ein derartiger Speicherleuchtschirm beschrieben, der in eine Röntgendiagnostikeinrichtung eingesetzt werden kann. Der Speicherleuchtschirm wird als strahlenempfindlicherWandler mit Röntgenstrahlen bestrahlt, so daß in ihm Defektelektronen erzeugt werden, die in Potentialfallen (Traps) mit höherem Energieniveau gespeichert werden. In einer Auslesevorrichtung wird dieser Speicherleuchtschirm von einer zusätzlichen Strahlenquelle für eine Strahlung einer ersten Wellenlänge, beispielsweise einem Laser, bildpunktweise abgetastet, so daß die in den Traps gespeicherten Elektronen angeregt werden und in niedrigere Energieniveaus zurückfallen können, wobei die Energiedifferenz in Form von Lichtquanten als Strahlung einer zweiten Wellenlänge abgestrahlt wird. Dadurch ist es möglich, das derart gespeicherte Röntgenstrahlenbild aus dem Speicherleuchtschirm auszulesen. Die emittierten Strahlen weisen dabei eine von den Anregungsstrahlen des Lasers unterschiedliche Wellenlänge auf.

Die Bildschärfe von den in der EP-A-0 021 174 beschriebenen Speicherleuchtschirmen, die in ihrer Speicherschicht als aktiven Stoff ein Bariumhalogenid, wie z. B. Bariumfluorochlorid (BaFCl) oder ein Bariumfluorobromid (BaFBr), enthalten, bemißt sich in der Regel mit wenigen Linienpaaren (Lp) pro Millimeter, etwa 3 Lp/mm. Zur Erhöhung der Bildschärfe werden nach obengenannter EP-A-0 021 174 der Speicherschicht Färbemittel beigemischt. Die verwendeten Farbstoffe bzw. Farbpigmente, die selbst keine Lichtemission zeigen, absorbieren aber Licht und vermindern dadurch die bei der Ausleuchtung erzielbaren Bildsignale.

Die Erfindung geht von der Aufgabe aus, die Bildschärfe bei einem Speicherleuchtschirm nach dem Obergriff des Patentanspruches 1 beträchtlich zu steigen und dabei einen Signalverlust zu vermindern. Erfindungsgemäß wird diese Aufgabe mittels der im Kennzeichen des Patentanspruchs 1 angegebenen Maßnahmen gelöst. Die Unteransprüche enthalten vorteilhafte Weiterbildungen der Erfindung.

Die Erfindung geht von der Erkenntnis aus daß die Bildschärfe von Speicherleuchtschirmen beträchtlich gesteigert werden kann, ohne daß sich ein Signalverlust bemerkbar macht, wenn besondere Sorgfalt auf die Vermeidung von Streuungen des Abtaststrahles der Speicherschicht verwendet wird.

Die Bildschärfe eines Speicherleuchtschirmes mit 60 mg Leuchtstoff pro $cm^2$, z. B. BaF(Cl, Br) : (Eu, Sr), kann so von 3 auf 6 Lp/mm gesteigert werden. Dabei kommen auf 100 g Speicherleuchtstoff 1 bis 20 g, vorzugsweise 5 g, Bariumsilikat-UV-Leuchtstoff der Formel $BaSi_2O_5$: Pb mit einem Fluoreszenzmaximum bei 351 nm und 1 bis 20 mg, vorzugsweise 3 mg, eines organischen Leuchtstoffes, der ein optischer Aufheller ist, mit einem Absorptionsmaximum bei 375 nm und einem Fluoreszenzmaximum bei 435 nm. Bei diesem Aufheller, der in der als "Zirkular Nr. 2205/3" unter Druckzeichen "36044 Printed in Switzerland 700.531" 1970 ausgegebenen Firmenschrift "Uvitex OB" der Firma CIBA-GEIGY beschrieben ist, handelt es sich um Derivate der Diaminostilbendisulfonsäure.

Der anorganische UV-Leuchtstoff vermindert überraschenderweise die Streuungen im Speicherschirm bei gleichzeitiger Anregung durch das von dem Speicherleuchtstoff emittierte Licht. Der organische Leuchtstoff als optischer Aufheller dient als Wellenlängenschieber zur Anpassung an die Empfindlichkeit eines dem Speicherleuchtschirm nachgeschalteten Fotosensors (Multiplier).

Die Bildschärfe kann auch erhöht werden, indem die Grenzfläche der Speicherschicht zur Unterlage zur Verhinderung von Streuungen des bei der Ausleuchtung des Speicherschirmes verwendeten Abtastlichtes angefärbt wird. Zu diesem Zweck hat es sich als günstig erwiesen, der Träger der Speicherschicht, insbesondere bei Benutzung eines Laserabtasters, mit einer violetten Anfärbung zu versehen, um eine Streuung des Laserstrahls zu vermeiden Zweckmäßig wird der Farbstoff dazu auf den Träger des Schirmes gebracht, bevor die Speicherschicht aufgetragen wird.

Zur Anfärbung des Hintergrundes der Speicherschicht hat sich insbesondere ein violetter Farbstoff bewährt, der als Dioxazinpigment im "Colour Index" unter der Nr. 51319 beschrieben ist. In der Firmen-Druckschrift "Hostapermviolett RL spezial", die unter dem Druckzeichen "Hoe. 4015 (Musterteil A)" der Farbwerke Hoechst AG, 6230 Frankfurt (Main) 80, herausgegeben wurde, ist dieser Farbstoff als ein Dioxazinpigment bezeichnet, das ein blaustichiges Carbazolviolett mit außerordentlich hoher Farbstärke ist.

Als günstig hat es sich auch erwiesen, zwischen dem Träger und der Speicherschicht eine 20 μm starke Schicht aus Titandioxid $(TiO_2)$ anzubringen, die mit dem violetten Farbstoff eingefärbt ist. Durch Verwendung von 0,1 bis 1 g Farbstoff pro 100 g Titandioxidbindemittel wird eine geeignete intensive Anfärbung erhalten. Zweckmäßig wird der Farbstoff im Bindemittel des Titandioxids gelöst und zusammen mit diesem aufgetragen. Eine günstige Mischung ergibt sich aus 0,6 Hostapermviolett RL spezial, die in 200 ml Methylglykolazetat gelöst sind, dem dann 20 g Polyvinylazetat hinzugefügt werden. In diesen Lack werden schließlich 100 g Titandioxid eingerührt und gut dispergiert. Der so erhaltene Gießlack kann mit Hilfe einer Gießvorrichtung mit einem Gießspalt von 0,1 μm auf eine Polyesterfolie als Unterlage gegossen und bei +80°C getrocknet werden, bis sich eine einheitlich deckende, d. h. eine etwa 20 nm dicke, Hintergrundschicht ergibt.

Die gut durchgetrocknete angefärbte Schicht wird dann mit der eigentlichen Speicherleuchtschicht belegt, indem eine Dispersion aufgetragen wird, die neben einem Lösungsmittel und Bindemittel den Speicherleuchtstoff und eine Mischung aus anorganischem und organischem UV-Leuchtstoff enthält. Als Lösungsmittel verwendet man dabei vorzugsweise Butylazetat und als Bindemittel Polymethylmethacrylat. Die Mengen werden zweckmäßig so gewählt, daß nach dem Trocknen eine auf der Hintergrundschicht haftende feste Speicherleuchtschicht erhalten wird, die eine Leuchtstoffbelegung von etwa 60 bis 80 mg BaF(Cl, BR) : Eu pro cm² aufweist.

Eine Mischung, die diesen Zweck erfüllt, besteht aus einem Lack, der in einer Lösung aus

| 3 mg | optischen Aufheller und |
| 40 g | Polymethylmethacrylat in |
| 200 ml | Methylglykolazetat |
| 100 g | Speicherleuchtstoff sowie |
| 5 g | Bariumsilikatleuchtstoff |

dispergiert enthält.

Dieser Gießlack ergibt mit Hilfe einer Gießvorrichtung mit einem Gießspalt von 0,5 μm auf der Hintergrundschicht eine geeignete Speicherschicht.

Abschließend erhält die Speicherleuchtsicht eine nach dem Trocknen, etwa 10 nm starke Schutzschicht. Sie kann durch Auftragen einer Lackschicht erhalten werden, die eine feuchtigkeitsfeste Abdeckung ergibt. Ein solcher Lack besteht vorzugsweise aus einer Lösung von 10 g Polyvinylchlorid (PVC) in 100 ml Methylglykolazetat. Die Auftragung und Zusammensetzung des Schutzlackes ist dabei so gewählt, daß keine Beeinträchtigung der vorher angebrachten Speicherleuchtschicht verursacht wird.

Als Träger sind aus der Leuchtschirmherstellung bekannte Unterlagen verwendbar, etwa eine Kuststofffolie, die 250 nm stark ist und aus Polyester besteht.

Die Erfindung ist nachfolgend anhand eines in der Zeichnung dargestellten Ausführungsbeispiele näher erläutert. Es zeigen:

Fig. 1  einen Querschnitt durch einen erfindungsgemäßen Speicherleuchtschirm und

Fig. 2  eine schematisch dargestellte Röntgendiagnostikeinrichtung zur Anwendung des erfindungsgemäßen Speicherleuchtschirmes.

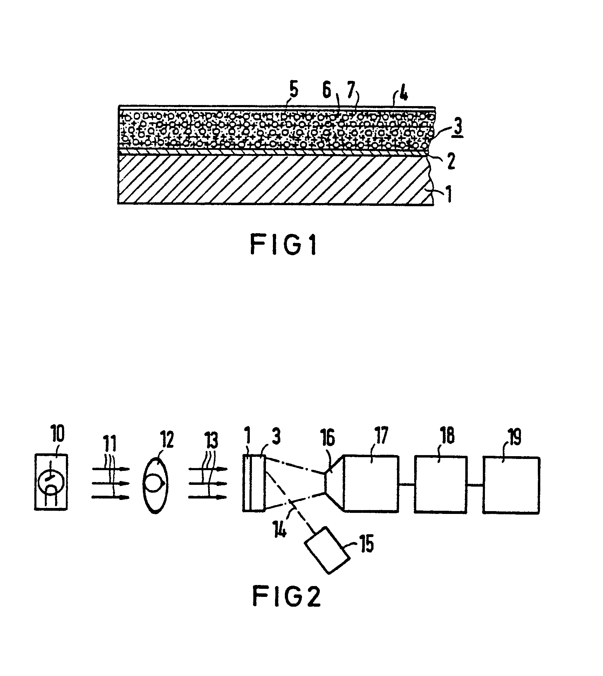

In der Fig 1 ist der Träger 1 des Speicherleuchtschirmes dargestellt, der 250 nm stark ist und aus Polyester bestehen kann. Auf diesen Träger 1 ist eine Hintergrundschicht 2 aufgetragen, die aus einem Bindemittel aus Polyvinylacetat besteht und pro cm² 10 mg Titandioxid enthält. Außerdem ist diese Hintergrundschicht 2 violett eingefärbt. Auf der Hintergrundschicht 2 befindet sich die eigentliche Speicherschicht 3, die mit einer Schutzschicht 4 abgedeckt ist. In der Speicherschicht 3, die als Bindemittel Polymethylmethacrylat enthält, sind pro cm² Leuchtfläche 60 bis 80 mg BaF(Cl, Br) : Eu als Speicherleuchtstoff 5 und 4 mg BaSi₂O₅ : Pb-Leuchtstoff als anorganischer UV-Leuchtstoff 6 sowie 0,01 mg eines optischen Aufhellers 7 als organischer Leuchtstoff enthalten. Die Schutzschicht 4 ist 10 nm stark und besteht aus PVC. Die Herstellung der Schichten 1 bis 4 erfolgte nach oben angegebenem Rezept.

In der Fig. 2 ist eine Röntgenstrahlenquelle 10 dargestellt, von der Röntgenstrahlen 11 ausgehen, die einen Körper 12 durchdringen. Anschließend gelangen die mit 13 angedeuteten, durch den Körper 12 abgeschwächten Strahlen durch die Trägerschicht 1 hindurch in die Speicherschicht 3, in der das Strahlenbild als Aufnahme gespeichert wird.

Die so erhaltene Aufnahme kann anschließend mit einem gut fokussierten Strahl 14 aus einem Laserabtaster 15 ausgeleuchtet werden. Das von der Speicherschicht 3 emittierte Licht kann dann in das Objektiv 16 einer Fernsehaufnahmekamera 17 gelangen, von der aus dann Signale an eine Signalbearbeitungsanlage 18 abgegeben werden, von der schließlich entsprechend verarbeitete Signale an eine Wiedergabeeinrichtung 19 gelangen. Letztere kann beispielsweise ein Monitor sein, auf dessen Leuchtschirm das gespeicherte Strahlenbild wiedergegeben und festgehalten, etwa fotografiert, werden kann. Von der Wiedergabeeinrichtung 18 aus kann aber auch eine elektronische Speicherung erfolgen.

Die Wirkung der Erfindung beruht darauf, daß bei der Abtastung mittels des Strahls 14 in der Speicherschicht 3 das abtastende Licht an der seitlichen Ausbreitung durch den beigemischten anorganischen UV-Leuchtstoff gehindert wird, das Signal durch den organischen UV-Leuchtstoff verstärkt wird und schließlich durch die Anfärbung der Hintergrundschicht 2 eine Streuung des abtastenden, gut fokussierten Laserstrahls 14 verhindert wird.

**Patentansprüche**

1. Speicherleuchtschirm für Strahlungsbilder mit einer lumineszierenden Speicherschicht, die in einem Bindemittel einen Speicherleuchtstoff und einen Farbstoff enthält, wobei der Speicherleuchtstoff zum Auslesen der in dem Speicherleuchtschirm enthaltenen gespeicherten Information durch Strahlung mit einer ersten Wellenlänge angeregt wird, so daß er Strahlungen einer zweiten Wellenlänge emittiert, und der Farbstoff die Strahlung der ersten Wellenlänge mehr absorbiert als die Strahlung der emittierten zweiten Wellenlänge, dadurch gekennzeichnet, daß als Farbstoff ein anorganischer UV-Leuchtstoff und ein als optischer Aufheller bekannter organischer Leuchtstoff verwendet wird.

2. Speicherleuchtschirm nach Anspruch 1, dadurch gekennzeichnet, daß zur Speicherung von Röntgenbildern der Speicherleuchtsstoff ein Bariumfluorid-Leuchtstoff der Formel BaF(Cl, Br) : Eu ist, daß das Fluoreszenzmaximum des anorganischen UV-Leuchtstoffes bei 351 nm liegt und daß das Fluoreszenzmaximum des organischen Leuchtstoff es bei 435 nm liegt.

3. Speicherleuchtschirm nach Anspruch 2, dadurch gekennzeichnet, daß 100 g Speicherleuchtstoff 1 bis 20 g, vorzugsweise 5 g, Bariumsilikat-UV-Leuchtstoff und 1 bis 20 mg, vorzugsweise 3 mg, des als optischer Aufheller bekannten organischen Leuchtstoffes enthalten.

4. Speicherleuchtschirm nach Anspruch 1, dadurch gekennzeichnet, daß der Hintergrund der Speicherschicht mit einem das Licht eines zur Ausleuchtung des Speicherleuchtstoffes benutzten Abtaststrahls und seiner Streuungen absorbierenden, insbesondere violetten Farbstoff bzw. Farbpigment angefärbt ist.

5. Speicherleuchtschirm nach Anspruch 4, dadurch gekennzeichnet, daß die violette Anfärbung aus einem organischen Farbstoff besteht, der ein Dioxazinpigment ist, das im Colour Index unter der Nr. 51319 geführt ist.

6. Speicherleuchtschirm nach Anspruch 4, dadurch gekennzeichnet, daß die Speicherschicht auf einer Schicht aufgetragen ist, die Titandioxidpulver enthält und die angefärbt ist.

## Claims

1. Storage screen for radiation images with a luminescent storage layer, which contains a luminous storage substance and a colouring substance in a bonding material, the luminous storage substance being stimulated by radiation with a first wave length to read through the stored information contained in the storage screen, so that it emits radiation of a second wave length, and the colouring substance absorbs the radiation of the first wave length more than the radiation of the emitted second wave length, characterised in that an inorganic UV luminous substance and an organic luminous substance, which is known as an optical brightening agent, are used as colouring substances.

2. Storage screen according to claim 1, characterised in that for the storing of X-ray images, the luminescent storage substance is a barium fluoride luminous substance with the formula BaF(Cl, Br) : Eu, in that the fluorescence maximum of the inorganic UV luminous substance is 351 nm, and in that the fluorescence maximum of the organic luminous substance is 435 nm.

3. Storage screen according to claim 2, characterised in that 100 g of luminous storage substance contain 1 to 20 g, preferably 5 g, of barium silicate UV luminous substance and 1 to 20 mg, preferably 3 mg, of the organic luminous substance known as an optical brightening agent.

4. Storage screen according to claim 1, characterised in that the background of the storage layer is coloured with a colouring substance or colouring pigment, particularly of violet colour, which absorbs the light of a scanning beam, used to illuminate the luminous storage substance, and of its scatterings.

5. Storage screen according to claim 4, characterised in that the violet colouring comprises an organic colouring substance, which is a dioxazine pigment contained in the colour index under No. 51319.

6. Storage screen according to claim 4, characterised in that the storage layer is applied to a layer which contains titanium dioxide powder and is coloured.

## Revendications

1. Ecran luminescent d'enregistrement pour des images de rayonnement, comportant une couche luminescente d'enregistrement, qui contient, dans un liant, une substance luminescente d'enregistrement et un colorant, et dans lequel, pour la lecture de l'information enregistrée contenue dans l'écran luminescent d'enregistrement, la substance luminescente d'enregistrement est excitée par un rayonnement possédant une première longueur d'onde de telle sorte qu'elle émet des rayonnements possédant une seconde longueur d'onde, et le colorant absorbe plus le rayonnement possédant la première longueur d'onde que le rayonnement possédant la seconde longueur d'onde émise, caractérisé par le fait qu'on utilise comme colorant une substance luminescente minérale réagissant aux ultraviolets et une substance luminescente organique connue sous le terme d'agent de blanchiment optique.

2. Ecran luminescent d'enregistrement selon la revendication 1, caractérisé en ce que pour l'enregistrement de radiographies, la substance luminescente d'enregistrement est une substance luminescente à base de fluorure de baryum correspondant à la formule BaF(Cl, Br) : Eu, que le maximum de fluorescence de la substance luminescente minérale sensible aux ultraviolets se situe à 351 nm et que le maximum de fluorescence de la substance luminescente organique se situe à 435 nm.

3. Ecran luminescent d'enregistrement selon la revendication 2, caractérisé en ce que 100 g de substance luminescente d'enregistrement contiennent 1 à 20 g et de préférence 5 g d'une substance luminescente sensible aux ultraviolets et formée à base de silicate de baryum et 1 à 20 mg et de préférence 3 mg de la substance luminescente organique connue sous le terme d'agent de blanchiment optique.

4. Ecran luminescent d'enregistrement suivant la revendication 1, caractérisé par le fait que le fond de la couche d'enregistrement est coloré par un colorant ou un pigment coloré absorbant la lumière d'un faisceau d'exploration utilisé pour éclairer la substance luminescente d'engistrement, et absorbant ses dispersions, notamment un colorant ou un pigment coloré violet.

5. Ecran luminescent d'enregistrement suivant la revendication 4, caractérisé par le fait que la coloration violette est fournie par un colorant organique qui est un pigment dioxazine, qui est recensé sous le N°51319 dans le Colour Index.

6. Ecran luminescent d'enregistrement suivant la revendication 4, caractérisé par le fait que la couche d'enregistrement est déposée sur une couche qui contient une poudre de bioxyde de titane et est colorée.

FIG 1

FIG 2